# EUROPEAN PATENT APPLICATION

(11) **EP 2 200 248 A1**
(43) Date of publication of application: **23.06.2010**
(21) Application number: 08021996.7
(22) Date of filing: 18.12.2008
(51) Int. Cl.: H04L 29/06

(54) **Content sharing**

(71) Applicant: Nokia Siemens Networks Oy, 02610 Espoo (FI)
(72) Inventor: Bakos, Balazs, H-2045 Törökbálint (HU); Kiss, Attila, 8000 Székesfehérvár (HU)
(74) Representative: Bruglachner, Thomas E.

(57) **Abstract**

The invention relates to a method of controlling downloading of content by a downloading peer. It comprises the steps of:
receiving information about conditions, such as congestion, in an area served by a wireless cell or access point which provides wireless connectivity to users located therein including a particular uploading peer which is a candidate peer from which the downloading peer can potentially download at least part of a content file;
determining whether downloading from the particular uploading peer is desirable in view of the received information; and
sending to the downloading peer a peer list which indicates whether it can choose to download the at least part of the content file from the particular uploading peer or from another peer or other peers according to the received information.

## Description

This invention relates to content sharing. It is particularly, but not exclusively, related to content sharing which involves content being transferred over a wireless link. In one embodiment it relates to content being shared by mobile terminals.

There are a number of peer-to-peer (P2P) file sharing communications protocols. Such P2P protocols are configured to distribute large amounts of data widely without the original distributor incurring the costs of hardware, hosting and bandwidth resources. Instead, when data are distributed using such a protocol, each recipient supplies received pieces of the data to others, reducing the cost and burden on any given individual source, providing redundancy against system problems, and reducing dependence on the original distributor. One particularly well known P2P protocol is BitTorrent.

BitTorrent clients incorporate mechanisms to optimise their download and upload rates, for example they download pieces in a random order, in order to provide a widespread distribution of the pieces.

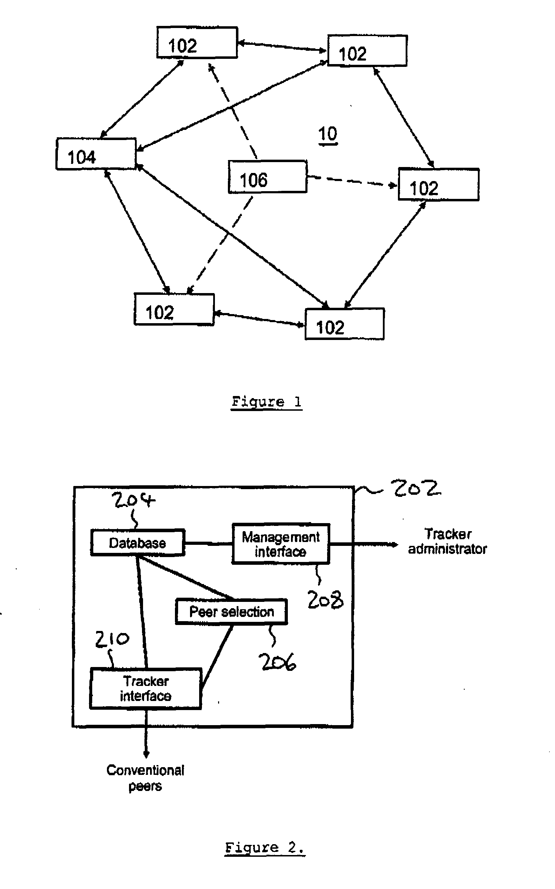

A BitTorrent system 100 is shown in Figure 1. This comprises a number of peers 102, including one particular peer 104 (referred to in the following as the initial seeder) which is the original source of a file (referred to in the following as the content file) which is to be distributed among the peers 102. A peer is one instance of a BitTorrent client running on a computer/device on the Internet to which other peers connect and transfer data. The file distribution is coordinated by a centralised server referred to as a tracker 106. The tracker 106, typically a web server, is used by peers to request the IP addresses of other peers associated with a torrent, and to exchange transfer statistics. The tracker 106 does not know which peers have which pieces, its job is to tell peers where to find each other.

When the initial seeder peer 104 is instructed to provide a content file to be shared with other peers 102, the peer 104 first creates a torrent file. This is a small file which contains metadata about the content file, and about the tracker 106. An address referred to as an announce URL provides information which enables peers 102 to connect to the tracker 106. It can be found in the torrent file.

Downloading a content file over BitTorrent typically starts by a user, who is using a particular peer 102, finding a uniform resource locator (URL) link associated with a torrent file and clicking on the link so that the torrent file is downloaded by the peer 102. Once the peer 102 has received the torrent file, it is able to make a request to download a content file by sending a HTTP GET request (announce request) to the announce URL of tracker 106. The announce request contains among other things info_hash, peer_id, ip, port, amount uploaded, amount downloaded (encoded as query parameters as used by HTML forms). When the tracker 106 receives the announce request, it stores the address of the requesting peer 104 in a database of peers and as a result, the tracker 106 maintains an up-to-date list of all possible peers which store the content file associated with a particular torrent file. In response to the announce request, the tracker 106 sends to the peer 102 in BEncoded format the addresses of the list of peers maintained by the tracker 106 in a message referred to as the announce response.

If the initial seeder peer 104 has not yet distributed any of the parts of the content file among the peers, the tracker 106 will tell a newly downloading peer 102 to download pieces of the content file from the initial seeder peer 104 by returning only that peer in the announce response. If parts of the content file have already been distributed among a number of peers, the tracker 106 will tell the newly downloading peers from which other peers 102 pieces of the content file are to be downloaded. The peer 102 can connect to all of those peers and download pieces from each simultaneously, or it can connect to a series of peers one after another and download pieces from each in turn.

The peers 102 which are involved in the uploading and downloading of a particular content file are called a swarm. As time passes and more peers enter the swarm, they begin to trade pieces with one another, instead of downloading directly from the initial seeder peer 104. These peers, with the exception of the initial seeder peer 104, are typically simultaneously sending (uploading) and receiving (downloading) different pieces of the same content file.

Internal functions of the tracker 106 will now be described with reference to Figure 2. Figure 2 shows a tracker 202 comprising a database 204, a peer selection block 206, and two interfaces - a management interface 208, and a tracker interface 210.

The database 204 is structured to contain:
configuration data, including port numbers for interfaces, peer selection policy (for example the number of returned peers), suggested reporting/polling frequency for peers; and a list of torrents, including info_hash, a list of peers, id, address (IP, port), upload/download statistics, and state information.

The management interface 208 is configured to add/remove torrents from the database 204, and to change configuration, for example polling frequency and the number of returned peers.

The tracker interface 210 is configured to interpret HTTP requests from peers, put the peers which have sent requests into the database, refresh peer statistics, and send a peer list to the peers which have sent announce requests.

When the tracker 106 receives an announce request, the peer selection block 206 is configured to select a subset of peers of a given torrent, for example as a random choice of the peers, and to provide it to the requester peer in the announce response.

In tracker-based P2P systems, it should be understood that the number of peers there can be for different torrents can vary significantly. There might be only a handful. However, in many cases, there are a large number of peers. Since the tracker is configured to send only a limited defined number of peers, then if there are more peers than this defined number in the tracker database 204, the tracker returns a random subset of the peers stored in the database 204 for each request. The tracker should not include peers having a zero amount of downloaded data and instead prefers to include peers that have a larger amount of downloaded data.

The BitTorrent protocol is widely used to transfer data between personal computers (PCs). It is possible to download torrent clients into mobile devices, for example SymTorrent developed in the Technical University of Budapest. (http://en.wikipedia.org/wiki/SymTorrent)

The BitTorrent protocol performs very well over the conventional wired Internet, for example when users at home or in their own office locations are uploading and downloading data over their high-speed broadband connections. While the mean bandwidth per client of a central server system is usually limited, the theoretical bandwidth of BitTorrent is not so limited. If the content is very popular then the number of cooperating peers can be large and the download speed is proportional to that number. That is true until the system is saturated, that is the total speed reaches the maximum download bandwidth of the client or the number of peers reaches the total number of torrent pieces.

The BitTorrent protocol performs less well when users are uploading and/or downloading data over wireless links, for example using mobile devices which are connected to the Internet via cellular networks or wireless hotspots/access points. For example, in the case in which a number of peers are in the same cell of a cellular network, for example a cell in a GPRS or 3G network, there are fixed total amounts available for upload and for download. If the number of peers increases in that particular cell, then the overall download rate cannot increase. Indeed, it might decrease because of protocol-related overheads. In that particular case, a central server solution in which each peer downloads data individually from a central server would be more efficient than BitTorrent.

There are other potential difficulties in addition to the location of the peers. If two peers are connected to a network via different technologies (for example one is using GPRS and another is using 3G) then it might cause more traffic in total in the network. Different technologies impose different limits for upload and download limits and they might induce different traffic load on the network.

An important property of the BitTorrent protocol from the point of view of an operator or a service provider is that the traffic demand on the network is lower than would be the case if other file sharing methods were to be used (with the same download volume from the downloaders). However, in its current form, BitTorrent is not particularly suitable for networks in which a localised bandwidth provision, having a fixed upper limit, for example a cell or a wireless hotspot/access point, is shared by a number of downloaders.

Various forms of P2P have been proposed in which peer-to-peer connections are optimised. One is P4P, or Proactive network Provider Participation for P2P, (described at http://en.wikipedia.org/wiki/Proactive network Provider Parti cipation for P2P) which has an iTracker functionality which provides information on how ISPs' networks are configured. P2P client software (and P2P trackers) can query the iTracker to identify the data routes the ISP prefers and connections to avoid, changing depending on the time of day. The P2P software can then co-operatively connect to preferred peers instead of choosing peers randomly.

Further discussion of P4P can be found in a document at http://ccr.sigcomm.org/online/files/p351-xieA.pdf

According to a first aspect of the invention there is provided a method of controlling downloading of data by a downloading peer, the method comprising the steps of:
receiving information about conditions in an area served by a wireless connectivity point which provides wireless connectivity to users including a particular uploading peer which is a candidate peer from which the downloading peer can potentially download the data;
determining whether downloading from the particular uploading peer is desirable in view of the received information; and sending to the downloading peer an indication of whether it should download the data from the particular uploading peer according to the received information.

Preferably, the method involves sending a peer list which indicates whether a downloading peer can choose to download at least part of a content file from the particular uploading peer or from another peer or other peers according to the received information.

Preferably, the method involves sending to the downloading peer a list of other peers according to conditions in their respective areas. The list may be a subset of all peers from which the downloading peer could download the data.

Preferably, the data is a file. It may be a content file. The file may be sub-divided into a plurality of pieces for sharing. The downloading peers may carry out a plurality of simultaneous downloading activities in respect of different pieces of data. Alternatively, the data may be kept in the form of a single unitary file which can be downloaded from one peer. In other embodiments, there may be a plurality of pieces of data which are all downloaded from one uploading peer.

Preferably, the wireless connectivity point comprises a cell in a cellular wireless network. Alternatively it comprises a wireless access point, for example a WLAN hotspot. Uploading peers may be located in a number of areas, some of which are cells and some of which are wireless access points.

Preferably, determining whether downloading from the particular uploading peer is desirable depends on the likelihood of this downloading having an adverse effect on service provision to the users in the area.

Preferably, the wireless connectivity point has a relatively limited bandwidth such that downloading the data by too many peers may cause service impairment to other users of the wireless connectivity point, whether they be peers or non-peer users connecting to the wireless connectivity point.

Preferably the method relates to a peer-to-peer arrangement. It may relate to a file sharing arrangement.

The invention may include aspects of scheduling of downloading, for example to avoid times when there typically is congestion or there is actual congestion. The invention may include aspects of selecting sources of downloading. In one embodiment, this is done by network-based or network-assisted selection.

In a system according to the invention, there may be a peer selection component which is configured to select a subset of peers of a given discrete data item which is being downloaded. This subset may be dynamic in that it may change as time passes. It may change as a result of the downloading peer sending requests for new lists of peers from time to time.

In one embodiment of the invention, the conditions in the area relate to the time of day and, based on expected load for that area or for a network in general, determining that there is likely to be sufficient load to justify limiting the peers from which the data is to be downloaded.

Preferably the method is based on network assisted peer selection in which the peer selection takes place in a network which is responsible for conveying data rather than in a peer-to-peer service. Preferably, the network is under the control of a network operator. Preferably, the selection takes place in a network assistance block located within the network. Preferably, the selection takes places in a network peer selection block controlled by a network operator which operates in cooperation with a tracker which is involved in the coordination of the peer-to-peer service. Preferably, the network peer selection block receives a set of candidate peers and uses this set to generate an optimised peer list.

Preferably, the network peer selection block uses network and/or device characteristics to produce the optimised peer list. These characteristics may include one or more of traffic load (uplink and/or downlink) of wireless connectivity points, bandwidths of candidate peers, for example based on relevant access technologies (GPRS, EDGE, 3G, WLAN, ADSL, etc.), candidate peer's device type and capabilities, including subscription type, behaviour history, average peer time spent in the P2P community, the time of day, such as peak time or non-peak time, traffic load of other network components (gateways, controllers, backbone), and the locations (in terms of cell, wireless access point, GPS coordinates) of a requester peer and of candidate peers.

In one embodiment, the network peer selection block may choose such candidate peers in order to avoid including too many peers which are served by the same wireless connectivity point. In another embodiment, it may choose to avoid including too many candidate peers which are served by congested wireless connectivity points. It may choose to avoid including any peers from wireless connectivity points that are currently congested. In yet another embodiment, the network peer selection block may prefer to select peers which subscribe to the same network as a requesting peer. However, the network peer selection block is not restricted to selecting only peers that are associated with the network operator. For example, peers which are associated with other network operators, for example as a subscriber, having a high bandwidth may be selected. The network peer selection block may prefer to select fewer peers which are mobile terminals in order to select non-mobile terminals, such as PC terminals. The network peer selection block may prefer to select fewer peers which are mobile terminals operating in the network in order to select peers which are mobile terminals operating in other networks.

Preferably, once a set of peers has been selected from candidate peers, it is sent to a requesting peer in the form of an optimised peer list. An empty peer list may be sent in response to a request for a peer list from a requesting peer. The peer list sent to a requesting peer can modify how frequently it asks for a new peer list by specifying a particular announce frequency.

In one embodiment of the invention, the network peer selection block divides candidate peers into a number of groups indicating their suitability for use as uploading peers. There may be a group relating to peers recommended for use in uploading, peers not recommended for use in uploading, and/or peers about which there no particular recommendation. Peers which are recommended for use in uploading may be further specified by an indication of how many peer lists into which they should be included.

A tracker may be connected via a plurality of interfaces to several network operators. In this case, it may combine the results of peer selection from several network operators. This may involve the tracker receiving optimised lists from several network operators and combining them.

In one embodiment of the invention, optimised peer lists contain not only a subset of peers but also ranking information which provides the system with the ability to choose preferred peers for uploading. This may be a number ranking. It may be in a group arrangement.

The invention may provide a peer-to-peer system having centralised network management via a central server that maintains a list of active clients and status information and decentralised peer-to-peer data distribution in which peers download small, random, subsets of data.

It will be understood from the description of the invention that the controlling downloading of data does not necessarily mean that this involves directing of the data themselves or establishing necessary connections but may simply involve the indication of sources of download. A downloading peer may not be obliged to download from such indicated sources. It may receive a new indication of sources of download and may elect to ignore these and continue to download from sources of download that had previously been indicated to it.

According to a second aspect of the invention there is provided a network element for generating an indication relating to the downloading of data for a downloading peer, the network element being configured to:
receive information about conditions in an area served by a wireless connectivity point which provides wireless connectivity to users including a particular uploading peer which is a candidate peer from which the downloading peer can potentially download the data;
determine whether downloading from the particular uploading peer is desirable in view of the conditions; and
send the indication of whether the downloading peer should download the data from the particular uploading peer according to the conditions.

Preferably, the network element provides control information to a server. The server may provide the control information to the downloading peer. The control information may be a list of peers

According to a third aspect of the invention there is provided a server for sending an indication relating to the downloading of data to a downloading peer, the server being configured to:
receive the indication of whether the downloading peer should download the data from the particular uploading peer according to conditions in an area served by a wireless connectivity point which provides wireless connectivity to users including a particular uploading peer which is a candidate peer from which the downloading peer can potentially download the data; and
send the indication to the downloading peer.

Preferably, the server is a tracker. It may be a tracker in a BitTorrent peer-to-peer file sharing arrangement.

According to a fourth aspect of the invention there is provided a network-assisted server arrangement for sending an indication relating to the downloading of data to a downloading peer, the arrangement being configured to:
receive information about conditions in an area served by a wireless connectivity point which provides wireless connectivity to users including a particular uploading peer which is a candidate peer from which the downloading peer can potentially download the data;
determine whether downloading from the particular uploading peer is desirable in view of the conditions; and
send the indication to the downloading peer of whether it should download the data from the particular uploading peer according to the conditions.

The arrangement may be owned and/or controlled by a content provider. It may be owned and/or controlled by a network operator.

According to a fifth aspect of the invention there is provided a system for providing an indication relating to the downloading of data to a downloading peer, the system being configured to:
generate information about conditions in an area served by a wireless connectivity point which provides wireless connectivity to users including a particular uploading peer which is a candidate peer from which the downloading peer can potentially download the data;
determine whether downloading from the particular uploading peer is desirable in view of the conditions;
send the indication to the downloading peer of whether it should download the data from the particular uploading peer according to the conditions; and
upload the data from the particular uploading peer and provide it to the downloading peer.

According to a sixth aspect of the invention there is provided a computer program product comprising software code that when executed on a computing system performs a method of controlling downloading of data by a downloading peer, the computer program product comprising:
executable code configured to receive information about conditions in an area served by a wireless connectivity point which provides wireless connectivity to users including a particular uploading peer which is a candidate peer from which the downloading peer can potentially download the data;
executable code configured to determine whether downloading from the particular uploading peer is desirable in view of the received conditions; and
executable code configured to send to the downloading peer an indication of whether it should download the data from the particular uploading peer according to the received conditions

According to a seventh aspect of the invention there is provided a method of carrying out peer-to-peer data transfer, the method comprising the steps of:
generating an encryption key from a pointer file relating to a particular data file, the pointer file providing at least one address via which information about sources from which to download the data file is obtainable;
encrypting at least part of the data file with the encryption key.

The data file is a unitary entity which may be encrypted with the encryption key in its entirety. The encryption key may be applied to a plurality of sub-parts of the data file. The encryption key may be generated in a series of variants which are each applied to ones of a plurality of sub-parts of the data file.

Preferably, access to the pointer file is restricted to authorised users. It may be restricted to users who have subscribed to a content sharing service.

According to an eighth aspect of the invention there is provided a method of controlling a peer-to-peer data transfer service, the method comprising including information which is useable to identify a particular peer in a pointer file which provides at least one address via which information about sources from which to download the data file is obtainable.

Preferably, the information is contained with the content of the pointer file and is not the address of the pointer file. Preferably, a URL in the pointer file is configured to include peer identification information. This may be an announce URL. If it is in the form of a string of characters, part of its string of characters may be a key parameter. The peer identification information may be included by a server. In one embodiment, it is included by a tracker. The method may involve personalising the point file to a particular peer. This may be done in response to an announce request from the particular peer so that a personalised announce URL is returned.

Preferably, the peer identification information is based on at least one of a timestamp, user ID, and torrent ID. It may be based on several of these elements. The peer identification information may be produced by encrypting the element or elements with a server key.

The method may involve a server or a tracker checking if the key is valid.

Preferably, access to the pointer file is restricted to authorised users. It may be restricted to users who have subscribed to a content sharing service.

In other aspects, the invention provides a tracker, a network element, a peer-to-peer data transfer system, and computer programme product according to the seventh and eighth aspects of the invention.

Embodiments of the invention will now be described, by way of example only, with reference to the accompanying drawings in which:
Figure 1 shows a file sharing system;
Figure 2 shows a tracker for use in the system of Figure 1;
Figure 3 shows a tracker and network assisted peer selection arrangement according to the invention which is for use in the system of Figure 1; and
Figure 4 shows a tracker and network assisted peer selection arrangement according to another embodiment of the invention which is also for use in the system of Figure 1.

Figures 1 and 2 have been described in the foregoing.

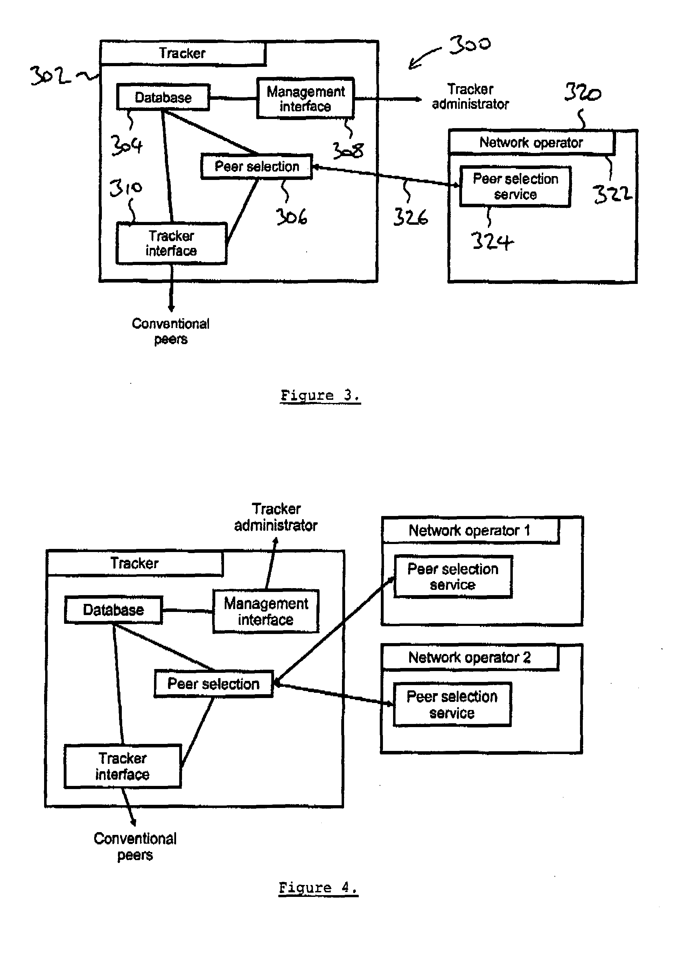

Figure 3 shows a tracker and network assisted peer selection arrangement 300 according to the invention which is also suitable for use in the system of Figure 1. The arrangement 300 comprises a tracker 302 and a network assistance block 320 located within a network which is under the control of a network operator 322.

The tracker 302 comprises a database 304, a peer selection block 306, and two interfaces, a management interface 308, and a tracker interface 310. The tracker 302 has a number of features in common with the tracker 202 of Figure 2 (similar features have been given similar reference numerals), and operates as in a similar way. For example, in respect of a particular torrent, it sends peer lists to the peers within the torrent when they are requested so the peers are provided with information about sources from which pieces of content files can be downloaded.

The network assistance block 320 comprises a peer selection block 324 which operates in cooperation with the tracker 302, and particularly in cooperation with the peer selection block of 306 of the tracker 302. For the sake of clarity, in the following these will be referred to as the tracker peer selection block 306 and the network peer selection block 324.

In operation, a requester peer sends an announce request to the tracker 302, and the tracker peer selection block 306 refers to the database 304 containing all of the peers in that torrent and puts some of these in a subset of peers (referred to as candidate peers) which is sent to the network peer selection block 324 for this block to generate an optimised peer list. Although the tracker peer selection block 306 can be configured to send a list including all of the peers, since it is possible that there could be hundreds of peers, it is preferred that there be an upper limit to the number of peers which are included. For example, there may be two hundred or more peers and the tracker peer selection block 306 provides a subset of up to twenty five peers which are either selected randomly or are selected on the basis of having particular/desirable upload/download statistics. The tracker peer selection block 306 sends the subset of peers to the network peer selection block 324 over a link 326.

The network peer selection block 324 receives the subset of peers and then uses network and device characteristics to produce an optimised peer list. These characteristics can include factors which relate to:
a) the traffic load (uplink and downlink) of cells of candidate peers and available time-slots;
b) the bandwidths of the candidate peers, for example based on relevant access technologies (GPRS, EDGE, 3G, WLAN, ADSL, etc.);
c) the candidate peer's device type and capabilities, subscription type, behaviour history, average peer time spent in the P2P community;
d) the time of day, such as peak time or non-peak time;
e) the traffic load of other network components (gateways, controllers, backbone); and
f) the location (in terms of cell, wireless access point, GPS coordinates) of a requester peer and candidate peers.

Any suitable combination of the characteristics of a) to f) may be employed as will be explained in the following.

It should be noted that a number of the characteristics are time-varying, either in a random or only broadly predictable way, for example ones which can change as time passes such as the loading of a cell, and ones which are time-varying in a more predictable way, such as the timetable of when peak time is in a cellular network.

The network peer selection block 306 receives input from various network sources such as network monitoring equipment containing information about distribution of load across the network and in particular cells, and subscription databases containing information about the capabilities of candidate peers. The network peer selection block 306 uses these inputs to generate an optimised peer list which, when used, enables the requester peer for which the optimised peer list has been generated to download pieces of data to limit the amount of localised congestion caused which will adversely affect the operation of the network. For example the network peer selection block 324 carries out a check to make sure that it does not include in the optimised peer list too many peers which are present in the same cell. The invention is configured to factor in congestion generally in the cell. The simplest algorithm for peer selection is not to return peers from cells that are currently congested. If the operator can predict a cell will be congested in the near future, for example, then it may not return peers from that cell either. For example, Peer A (from cell A) receives a peer list which contains peer B (from cell B) and the two peers exchange pieces. If cell B becomes congested (in terms of uploading, downloading, or both), then in a future optimised peer list for peer A, the network peer selection block 324 includes peer C (from cell C) instead of peer B. If cell A itself is heavily loaded, the network peer selection block 324 has different options to reduce the load in cell A - it can limit or delay the download by returning a short peer list containing only a few peers or even send an empty peer list. As a further example, if peers which are sending/receiving/exchanging data are in different mobile networks or if one is in a mobile network and the other is a PC connected by the Internet, then the transferred data must travel between different service providers. In the case of data transfer between mobile terminal peers, transferring across network operators involves greater cost and can consume more bandwidth than transferring within the same network under the control of the same network operator. Therefore, the network peer selection block 324 may prefer to include in the optimised peer list peers which subscribe to the same network as the requesting peer. It should be understood that even though the network peer selection block 324 might not positively include candidate peers in the optimised peer list which are PC terminals or WLAN connected mobile terminals, by not including certain mobile terminals which are connected over a cellular connection, the resulting optimised peer list may be biased towards including a greater proportions of PC terminals and/or WLAN connected mobile terminals.

The network operator provides information about the state of its own network and mobile terminals using it to produce the optimised peer list. The operator does not necessarily need to distinguish between overloading of a cell caused by general network use, by BitTorrent traffic, or by other Internet applications.

The network peer selection block 324 is not restricted to only including peers in the optimised list that are associated with the network operator. For example, if a particular peer operating in that network but associated with another network operator, for example as a subscriber, is known by the network peer selection block 324 to have a high bandwidth then it can include that peer in the optimised list.

Having too many uploading peers in a cell can cause congestion. This can be tackled by making sure that fewer mobile terminals operating in the network are included in optimised peer lists in order that uploading comes from PC terminals or from uploading mobile terminals operating in other networks. However, even if there are enough uploading PC terminals to reduce upload congestion in the network, download congestion can then become a problem. Therefore, the numbers of uploading and downloading mobile terminals in a cell and in the network in general is considered by the network in producing optimised peer lists in respect of different torrents.

Operation of the invention, in terms of how it affects the generation of possible optimised peer lists, will now be explained. In an example case, a file sharing system has five peers (A, B, C, D, and E) which have stored in their memories at least parts of a content file. Peer X decides to download the content file. A user of peer X locates a link to the torrent file and clicks it.

### Example 1

In this case, the network peer selection block 324 recognises that peers A and B are using the cellular wireless connectivity of a heavily-loaded cell Y. Therefore it will send an optimised peer list of C, D, and E to the tracker 302 which is then sent to the peer X.

### Example 2

In this case, the network peer selection block 324 recognises that peers A, B and C are uploading over respective cellular connections (but not necessarily of the same cell) and the network and it is peak time. It will send an optimised peer list of D and E having ADSL connection with good uplink speed to the tracker 302 which is then sent to the peer X.

### Example 3

In this case, the network peer selection block 324 recognises that peer A and B are using the cellular wireless connectivity of a heavily loaded cell Y. Therefore it will send an optimised peer list of C, D, and E to the tracker 302 which is then sent to the peer X. The operation of peer A changes from uploading over a cellular connection to uploading over a broadband or fixed connection, for example from 3G or GPRS to WLAN/ADSL. Some time after the change in connection type of peer A, the tracker 302 sends a new optimised peer list (A, C, D, and E) to peer X which, as can be seen, now contains peer A connected via its new connection type.

The network peer selection service might not be aware of a change in the connectivity type employed by a peer (for example switching from 3G Vodafone to a local WLAN access point). If a peer switches to a different network it typically gets a new IP address which results in the peer reporting again to the tracker with its new address and parameters. The tracker or peer selection service does not need to know that the new peer (connected via WLAN) is the same peer (that was connected via a cellular connection). It just sees a new peer appear and an old peer disappear. With time the new peer may start to appear in optimised peer lists.

### Example 4

In this case, the network peer selection block 324 recognises that all the peers are using the cellular wireless connectivity of a heavily-loaded cell and it is peak time. It will accordingly elect to return an empty optimised peer list. Some time later, outside of the peak time, the network peer selection block 324 sends a new optimised peer list containing all the peers as they have good connections. Although this means that downloading takes more time, the user had to initiate the download only once.

Accordingly, it can be seen from these examples and from earlier discussion that generation of the optimised peer list can be based on various characteristics, such as:
(1) a network-related characteristic of how peers are connected (uploading over a cellular connection);
(2) a network-related characteristic of the location of peers (a heavily-loaded cell); and
(3) a network-related characteristic of time (downloading in or out of peak time).

There are other possibilities. For example, as mentioned in the foregoing, generation of the optimised peer list can be based on whether a terminal is capable of downloading over a relatively bandwidth-limited wireless connection between itself and the network or over a higher data rate connection. Since older mobile terminals may not support higher data rates, for example 3G, the network peer selection block 324 can be biased to include in the optimised peer list peers with a higher upload data rate potential rather than a lower upload data rate potential.

Once the network peer selection block 324 has selected a set of peers (for example eight peers) from the subset of peers to generate an optimised peer list, the optimised peer list is sent to the tracker 302.

The optimised peer list can modify how frequently a requester peer asks for a new peer list by specifying a particular announce frequency T. If the optimised peer list is an empty list, that is one in which no peers have been included, this can cause the downloading peer to delay starting to download until it requests another peer list which has been generated so that it contains some peers. Both the announce frequency T and the empty peer list can be used in combination in the same optimised peer list to provide for a longer period over which the requester peer starting to download the content file is delayed. This is useful for load balancing. The tracker may return a non-empty peer list for some of the peers and an empty list for others of the peers. On the next announcement they may receive a list including some peers and start downloading.

In one embodiment of the invention, the tracker peer selection block 306 is limited to sending a maximum of twenty five peers in the subset of peers which is sent to the network peer selection block 324 to limit the amount of (a) bandwidth used in the transmission, and (b) processing power required by the network operator to process the subset to produce the optimised peer list. In this case, the following example situations might result:
1) There are three peers in the swarm and so the tracker peer selection block 306 simply returns all those peers to the downloading peer without requesting an optimised peer list from the network.
2) There are fifteen peers in the swarm. The tracker peer selection block 306 sends all those peers to the network peer selection block 324 which returns five peers.
3) There are two hundred peers in the swarm. The tracker peer selection block 306 chooses a random subset of twenty five and sends it to the network peer selection block 324 which returns seven peers.

In another embodiment of the invention, the network peer selection block 324 divides the candidate peers into a number of groups indicating their suitability for use as uploading peers. For example, there might be three groups:
1) peers recommended for use in uploading;
2) peers not recommended for use in uploading; and
3) peers about which there is insufficient information to determine whether they are or are not recommended for use in uploading.

Peers in group 1) are further specified by an indication of how many peer lists into which they should be included.

The system can use this information to make a selection of a final peer list, for example by randomly selecting a sufficient number of peers in group 1). It might be that if there are sufficient peers in group 1), the final peer list can be supplemented by a random selection of peers from group 2). Although it would be preferred for this selection to be made in the network peer selection block 324, it does not necessarily have to be made there and can instead be made in the tracker 302.

In the embodiment of Figure 3, the tracker peer selection block 306 uses the network peer selection block 324 of one particular operator to get an optimised peer list. In another embodiment of the invention shown in Figure 4, the tracker peer selection block 306 is connected via a plurality of interfaces to several network operators and combines the results of peer selection blocks from several network operators. In this case, the tracker peer selection block 306 sends peer list subsets to each network and in return receives optimised lists from the networks and combines them. In common with the embodiments described in relation to Figure 3 in the foregoing, an optimised peer list can be an empty list and a delay time in order to reduce network load for a period of time.

In one embodiment of Figure 4, the optimised lists contain not only a subset of peers but also ranking information which provides the system with the ability to choose preferred peers for uploading. Although this could be a number for each peer on a simple scale, say from 1 to 10 based on expected bandwidth, this could instead be provided in the group arrangement described in the foregoing (that is the groups of 1), 2), and 3)). In producing a final peer list from the two network optimised peer lists, the tracker peer selection block 306 selects peers with the highest ranking numbers or from a most preferred group. However, other types of selection are possible, for example making a random choice, using all the peers returned from different operators, or using the peers from the network operator with which the requester peer is associated. This could for example lead to a situation in which there are two hundred peers in a swarm. The tracker peer selection block 306 chooses a random subset of twenty five which it sends to two operators. Respective network peer selection blocks of the operators return six and seven peers (with ranking numbers or groups). The tracker peer selection block 306 selects the peers with the highest ranking numbers or most favourable groups and generates a final peer list which consists of the six "best" peers.

It should be understood from the foregoing that, irrespective of whether a requesting peer is a mobile terminal or a PC terminal, since potentially there are mobile terminal uploading peers, the request for an optimised peer list is sent to one of more mobile network operators so that they can return optimised peer lists which reduce the possibility of undesirable network load. However, this general aim of reducing the possibility of undesirable network load does not necessarily require there to be the creation of an optimised peer list on the network side (for example in the network peer selection block). Accordingly, in another embodiment of the invention, when one or more mobile network operators receive lists of candidate peers, rather than returning optimised peer lists, they return candidate peers ranked according to their desirability of being used as uploading peers from the point of view of the network, whether in the form of ranking numbers or as members of particular groups. In order to avoid too much processing being required by the network, ranked candidate peers are returned less frequently than the tracker receives requests for peer lists. In this case, these ranked results can be cached in the tracker 302 and used to provide peer lists in response to future requests from downloading peers. The network peer selection service may include a caching policy in the response, indicating such things as the number of times the ranked candidates are to be used, or the expiry time after which they are not to be used. If the number is exceeded or the expiry time passes, the tracker peer selection block may ask the network peer selection block again to get a new set of ranked candidate peers and caching policy.

According to the invention a network operator does not need to disclose any sensitive information (topology, link cost, and current traffic) to the tracker because optimisation of peer choice is carried out in the network. This also applies to embodiments in which the results of peer selection service from different operators are combined and in which ranked candidate peers rather than an optimised peer list is returned.

The invention provides other advantages:

The tracker interface 310/410 to peers is a conventional file sharing interface. In addition, the peers use conventional client-side parts of the file sharing application. Therefore, neither of these parts of a pre-existing file sharing application needs to be modified. Although the tracker part needs to be modified, it is only actually the tracker peer selection block 306 which requires modification.

It optimises the network usage, and adopting the invention is therefore attractive to network operators which have an interest in providing content via file sharing.

Other modifications of P2P protocols are possible. In its current form many of the protocols do not provide adequate protection of sensitive data since they are sent in an unencrypted form. Accordingly, a modification of P2P protocols is proposed which provides a greater level of security to data being transferred, and particularly to sensitive data. Another drawback of many P2P protocols is that peers using them are largely anonymous. Although peers may be identifiable by means of their IP addresses, these can change. Because of this, it is difficult to class peers as being authorised or unauthorised and so in many cases it is not possible to use such a determination in order to permit access to content. Accordingly, another modification of P2P protocols is proposed which deals with this problem.

In order to describe these modifications in terms which can be readily understood, they will be described with reference to the BitTorrent protocol. As will be seen, the modifications deal with each of these problems and it is possible for both modifications to be applied in order that both problems are solved.

As mentioned in the foregoing, the first problem as that of unencrypted content. In the proposed modification to deal with this problem, the torrent file itself is used to generate a common secret such as a master key. This is generated from the content of the torrent file (since the torrent file contains hash values of each piece of data to be downloaded it is straightforward to generate a unique master key with hashing algorithms). Although the master key itself may be used as an encryption key, sub-keys can be generated for each data piece and chained block ciphers or stream ciphers can be used for encrypt those pieces. Such techniques are well known and are described in, for example, Applied Cryptography by Bruce Schneier.

The encryption/decryption capability is provided to the client in two ways. In a first way, the client is modified so that it has included within it the encryption/decryption capability. This capability uses the master key (or sub-keys thereof) on the fly so that before a piece of data is transmitted it is encrypted according to the master key (or an appropriate sub-key) and a piece of data is decrypted immediately on receipt before it is stored and then stored in decrypted form. In a second way, the client is not modified, that is an unmodified BitTorrent client is used, and when a piece of data is received, it is stored at the client in encrypted form. An application which is separate from and useable by the BitTorrent client can be used to decrypt the received pieces. Similarly, when pieces of data are to be transmitted, they are encrypted before they are handed to the client for sending. In this second approach, the BitTorrent client and the encryption/decryption application can be combined in a way such that the user does not realise that encryption is happening (for example the BitTorrent client makes a request to the decryption part of the application once all of the pieces of data have been downloaded). Similarly, when a content file is to be provided for sharing via BitTorrent, its constituent pieces of data are encrypted and then they are ready to be handled for transmission as they are shared with other peers. Having a separate encryption/decryption application provides an arrangement which from the user's point of view appears to work according to the first approach above but is actually based on a non-modified BitTorrent client. (There might need to be some minor amendment to the BitTorrent client so that it knows when a complete file needs to be encrypted/decrypted and requests the encryption/decryption part of the application to act accordingly.)

There are two elements which are useful in enabling the invention to work. Firstly, both uploading and downloading peers need to have access to the same master key. Secondly, peers are able to encrypt and decrypt so long as they have access to the torrent file. Dealing with the first point, it is known for peers to use a certain part of the torrent file (the so-called info part) to generate a hash value called info hash. The master key might be generated in the same way (using the same data and hash algorithm) or in a similar way to produce a master key which is identical to the info hash or something which is different. For example, the master key could be the bytes of the info hash in reverse order. Dealing with the second point, access to the torrent file is restricted to authorised peers, for example peers which have a relevant subscription. This can be provided by peers being given log-in credentials to permit them to log-in to an account from which they can gain access to the torrent files which are being shared among the authorised peers.

The BitTorrent protocol does not need significant modification to implement the invention because there is no need to modify the tracker.

As mentioned in the foregoing, the second problem is that of anonymity. In the proposed modification to deal with this problem, torrent files are changed so that they are personalised for particular peers. This is done by changing the announce URL in the torrent file so that it contains a key parameter without modifying the info hash value of the torrent file. For example:
www.tracker.com:6969/announce.php?key=A8590FD2323EC9.

In this case, the torrent file has been given the key parameter A8590FD2323EC9. This is done by the server (or tracker) from which peers get torrent files modifying (personalising) each in response to an announce request from a peer so that a personalised announce ULR is returned. In this case, the server (or tracker) needs a minor modification so that it is capable of decoding, validating and logging the key. A straightforward way to make the key is for the server (or tracker) to compose a plaintext of timestamp, user ID (for example ID relating to a user's account, such as username, an account identifier, or something similar, torrent ID, and encrypt these elements with a secret server key to produce the key parameter. The secret server key is a random value that is generated in the server (or tracker) and kept in secret, so only the server (or tracker) can generate keys and decode the key parameters. The key parameter is then placed in the announce URL as described in the foregoing. It will be understood that the client side of the BitTorrent application will not need to be modified at all. The server (or tracker) can easily identify if the key is valid - decrypting the key must match with the expected format, must contain the corresponding torrent ID, and the user ID must be valid.

It can be seen that one element used to generate the key parameter is a user ID, that is a piece of information which identifies an authorised user and, by implication, identifies a peer. In common with the foregoing, this identifying information can be subscription information which was provided to peers as part of log-in credentials to permit them to log-in to an account from which they can gain access to the torrent files which are being shared among the authorised peers. Such log-in credentials may allow authorised users to log-in to a site, for example a premium content site. According to the invention, this means that only authorised users receive valid announce URLs, that is ones which will be considered to be acceptable by the server (or tracker). The invention prevents an unauthorised party getting hold of a valid announce URL and using it to gain access to a torrent since, the server (or tracker) can use simple or complex policies to detect and prevent malicious actions, for example:
- The server (or tracker) detects if several peers use the same key at the same time. If this is detected, it is then able to put the key on a blacklist, close the connections, and rejects any further request with the same key.
- The server (or tracker) can ban the user itself (user ID decrypted from the key), suspend the account or apply other sanctions. Any access with keys based on the same user ID would be rejected.
- The server (or tracker) can limit the number of accesses with the same key. The number of access are logged, and over-used keys are rejected. The number of maximum accesses could be encoded in the key, or it can be a server (or tracker) configuration parameter.
- The key can contain an expiration date. Old keys are automatically rejected. The keys on blacklists can be dropped after their expiration date (in order to keep the list short).

It should be understood that the server (or tracker) can apply some of all of these detection policies in whatever combination is desired to provide a sufficient level of protection considered to be appropriate to the relevant service. Different policies can be used for different keys, for example the server (or tracker) can choose the policy by user ID or a policy class encoded in the key itself. Other types of detection policy may be applied, for example based on additional information which is personal to the valid user - a terminal ID, an IP address or IP addresses of expected type or within an expected range, heuristics based an factors such as patterns of access, frequency of access, diversity of access location, to make a decision about whether the requester peer is authorised.

Accordingly, in providing a modification which tackles the issue of anonymity, it provides a solution which:
(i) is compatible with the common protocol;
(ii) enables the system to identify the user from the personalized torrent file; and
(iii) makes it difficult for an unauthorised user to create a different but valid torrent file of its own.

The invention provides various advantages. Even though encryption is in use, the user does not need to enter passwords during the torrent uploading/downloading process. User identification is separate from the uploading/downloading process. The client does not need to be modified to have a special user interface and the user does not need to remember extra passwords. User identification happens when the user gets, for example downloads, the (small) torrent file itself, and any well-known user identification method can be used such as:
(a) web based authentication (username/password over HTTPS);
(b) use of MMS/BT (Multimedia Messaging Service/Bluetooth) to send the torrent file to users device; and/or
(c) other identification methods including fingerprint reading or using a secure ID card.

It should be noted that the identification methods of (a), (b), and (c) referred to can be used to control access to torrent file for the encryption aspect of the invention.

The encryption feature and the identification features can be implemented separately and only one of them may be needed in certain situations. In the case of private content (which is controlled by encryption) the user identification feature does not necessarily have to be implemented. It is in the user's own interest not to make the torrent file publicly available (put on the internet). In that case no modification needs to be made to the tracker. Furthermore, making available premium content might not need to be controlled by encryption. If, for example, a publisher does not feel that direct network monitoring to intercept this content is a real threat, then encryption does not need to be implemented and user identification may be relied upon. In that case no modification needs to be made to the client.

Therefore, in a method according to the invention, only minor modifications need to be made to the server and client sides of the peer-to-peer application. In some cases, no modification is required at all to one side or the other. The invention is generally compatible with with file sharing methods that are based on:
1) a central server for network management;
2) P2P data transfer between the peers; and
3) a pre-shared data file (for example, a torrent) containing at least the address of a server.

While preferred embodiments of the invention have been shown and described, it will be understood that such embodiments are described by way of example only. For example, although the invention refers to BitTorrent, it can apply to any tracker-based P2P distribution protocol. Numerous variations, changes and substitutions will occur to those skilled in the art without departing from the scope of the present invention. Accordingly, it is intended that the following claims cover all such variations or equivalents as fall within the spirit and the scope of the invention.

## Claims

1. A method of controlling downloading of data by a downloading peer, the method comprising the steps of:
receiving information about conditions in an area served by a wireless connectivity point which provides wireless connectivity to users including a particular uploading peer which is a candidate peer from which the downloading peer can potentially download the data;
determining whether downloading from the particular uploading peer is desirable in view of the received information; and
sending an indication of whether the downloading peer should download the data from the particular uploading peer according to the received information.

2. A method according to claim 1 in which the data is a file.

3. A method according to claim 1 or claim 2 in which the wireless connectivity point comprises a cell in a cellular wireless network.

4. A method according to any preceding claim in which determining whether downloading from the particular uploading peer is desirable depends on the likelihood of this downloading having an adverse effect on service provision to the users in the area.

5. A method according to any preceding claim in which the conditions in the area relate to traffic loading of the wireless connectivity point.

6. A method according to any preceding claim in which peer selection takes place in a network controlled by a network operator which operates in cooperation with a server which is involved in the coordination of a peer-to-peer service.

7. A method according to claim 6 in which the network receives a set of candidate peers and uses this set to generate an optimised peer list.

8. A method according to claim 6 or claim 7 in which the network chooses candidate peers in order to avoid including too many peers which are served by the same wireless connectivity point.

9. A method according to any of claims 6 to 8 in which the network chooses to avoid including too many candidate peers which are served by congested wireless connectivity points.

10. A method according to any of claims 6 to 9 in which the network is configured to have a preference to select peers which subscribe to the same network as a requesting peer.

11. A method according to any preceding claim in which once a set of peers has been selected from candidate peers, it is sent to a requesting peer in the form of an optimised peer list.

12. A method according to any preceding claim in which an empty peer list may be sent in response to a request for a peer list from a requesting peer.

13. A method according to any preceding claim in which a server is connected via a plurality of interfaces to several network operators and receives optimised peer lists from each.

14. A method according to claim 13 in which the server combines the results of peer selection from several network operators.

15. A network element for generating an indication relating to the downloading of data for a downloading peer, the network element being configured to:
receive information about conditions in an area served by a wireless connectivity point which provides wireless connectivity to users including a particular uploading peer which is a candidate peer from which the downloading peer can potentially download the data;
determine whether downloading from the particular uploading peer is desirable in view of the conditions; and
send the indication of whether the downloading peer should download the data from the particular uploading peer according to the conditions.

16. A server for sending an indication relating to the downloading of data to a downloading peer, the server being configured to:
receive the indication of whether the downloading peer should download the data from the particular uploading peer according to conditions in an area served by a wireless connectivity point which provides wireless connectivity to users including a particular uploading peer which is a candidate peer from which the downloading peer can potentially download the data; and
send the indication to the downloading peer.

17. A network-assisted server arrangement for sending an indication relating to the downloading of data to a downloading peer, the arrangement being configured to:
receive information about conditions in an area served by a wireless connectivity point which provides wireless connectivity to users including a particular uploading peer which is a candidate peer from which the downloading peer can potentially download the data;
determine whether downloading from the particular uploading peer is desirable in view of the conditions; and
send the indication to the downloading peer of whether it should download the data from the particular uploading peer according to the conditions.

18. A system for providing an indication relating to the downloading of data to a downloading peer, the system being configured to:
generate information about conditions in an area served by a wireless connectivity point which provides wireless connectivity to users including a particular uploading peer which is a candidate peer from which the downloading peer can potentially download the data;
determine whether downloading from the particular uploading peer is desirable in view of the conditions;
send the indication to the downloading peer of whether it should download the data from the particular uploading peer according to the conditions; and
upload the data from the particular uploading peer and provide it to the downloading peer.

19. A computer program product comprising software code that when executed on a computing system performs a method of controlling downloading of data by a downloading peer, the computer program product comprising:
executable code configured to receive information about conditions in an area served by a wireless connectivity point which provides wireless connectivity to users including a particular uploading peer which is a candidate peer from which the downloading peer can potentially download the data;
executable code configured to determine whether downloading from the particular uploading peer is desirable in view of the received conditions; and
executable code configured to send to the downloading peer an indication of whether it should download the data from the particular uploading peer according to the received conditions.
